# EUROPEAN PATENT APPLICATION

(11) **EP 3 235 410 A1**
(43) Date of publication of application: **25.10.2017**
(21) Application number: 17166178.8
(22) Date of filing: 12.04.2017
(51) Int. Cl.: A47J 37/07

(54) **BARBECUE WITH HEIGHT ADJUSTMENT**

(30) Priority: 21.04.2016 NL 2016650
(71) Applicant: Klauwe B.V., 7541 WH Enschede (NL)
(72) Inventor: VAN DER VEEN, Allard, 7512 DW Enschede (NL); BEUGELINK, Wybren Wieger, 7512 DW Enschede (NL); DUIJN, Roy Stefan, 7512 DW Enschede (NL)
(74) Representative: 't Jong, Bastiaan Jacob

(57) **Abstract**

The invention relates to a barbecue (1) comprising:

- a housing (2) with a bottom and a cylindrical wall standing upright from the bottom, wherein the free upper edge (5) of the cylindrical wall defines an access opening and wherein at least one air feed opening (3) is arranged in the cylindrical wall close to the bottom;
- height-adjusting means arranged against the inner side of the cylindrical wall;
- at least a carrier (9) arranged on the height-adjusting means, so that the height of the carrier (9) in the housing (1, 2) can be adjusted
wherein the height-adjusting means comprise at least three elongate elements (6) arranged along the cylindrical wall and each extending substantially over the height of the cylindrical wall, wherein each elongate element (6) is provided with a number of protrusions (7) arranged along the length and extending substantially radially in the housing (2); and wherein a number of projections (10) is arranged along the periphery of the carrier (9) and directed outward.

## Description

The invention relates to a barbecue comprising:
- a housing with a bottom and a cylindrical wall standing upright from the bottom, wherein the free upper edge of the cylindrical wall defines an access opening and wherein at least one air feed opening is arranged in the cylindrical wall close to the bottom;
- height-adjusting means arranged against the inner side of the cylindrical wall;
- at least a carrier arranged on the height-adjusting means, so that the height of the carrier in the housing can be adjusted.

Such a barbecue is for instance known from DE 202004012951. This publication shows a barbecue with a two-part cylindrical housing in which a carrier, such as a barbecue grille, is arranged. By rotating the upper part of the cylindrical housing relative to the lower part, the upper part will move through a curved track in height direction and thereby adjust the carrier in the height.

This known construction is however relatively expensive, and it is moreover not possible to adjust the distance of the carrier to the upper side of the housing, which is disadvantageous when it is desired to smoke large pieces of meat and a cover need therefore be arranged on the housing.

It is further generally known to use an oil drum as barbecue. A grille is here suspended from the upper edge of the oil drum. The height of the grille is thereby however not height-adjustable. The construction of the barbecue from an oil drum is however relatively simple and thereby relatively inexpensive.

It is now an object of the invention to reduce the above stated drawbacks. This object is achieved according to the invention with a barbecue according to the preamble, which is characterized in that the height-adjusting means comprise at least three elongate elements arranged along the cylindrical wall and each extending substantially over the height of the cylindrical wall, wherein each elongate element is provided with a number of protrusions arranged along the length and extending substantially radially in the housing; and
that a number of projections is arranged along the periphery of the carrier and directed outward.

With the barbecue according to the invention a height adjustment can be arranged in a simple cylindrical housing, such as an oil drum, by arranging the elongate elements against the inner wall. The protrusions protrude radially inward and form a support surface for the projections of the carrier, these projections in turn protruding outward.

Because of the co-action of protrusions and projections the carrier can be positioned at any level in the housing where protrusions are provided. The height of the carrier can be adjusted in simple manner by gripping the carrier, rotating it around the longitudinal axis of the housing, whereby the projections come out of engagement with the protrusions, then lifting or lowering it, and finally rotating it again so that the projections once again enter into engagement with the protrusions.

The invention moreover provides a simple and inexpensive construction in that use is made of a one-part cylindrical housing in which individual, elongate elements are placed which co-act with a carrier.

More carriers can further be arranged at different levels in the housing, whereby a fire basket and a water tray can also be arranged in the housing in addition to a meat griddle. In addition to a simple and inexpensive construction, a flexible construction is also obtained hereby, whereby barbecuing can be performed in diverse ways.

In a preferred embodiment of the barbecue according to the invention the protrusions of the elongate elements are arranged on a virtual circle with a first radius, as seen in axial direction of the housing, the projections of the carrier are arranged on a virtual circle with a second radius, and the first radius is smaller than the second radius.

Because the protrusions are arranged on a smaller virtual circle than the virtual circle on which the projections are arranged, it is possible to have the carrier engage on the height-adjusting means or disconnect therefrom by rotation around the longitudinal axis of the housing, so that the carrier can be brought to a different level within the housing.

In a further preferred embodiment of the barbecue according to the invention each elongate element is a sheet bent into having a substantially L-shaped cross-section, and having a uniform thickness.

The elongate element is in this embodiment formed from a bent sheet, whereby a very inexpensive and cost-effective embodiment is obtained for the elongate elements and thereby the height adjustment.

The protrusions are preferably tongues formed from the bent sheet. The sheet can for instance be provided with the desired form by laser cutting, after which the cut-out sheet is shaped into having an L-shaped cross-section.

In yet another embodiment of the barbecue according to the invention first recesses facing toward the upper side of the housing are provided in the edge of the tongues and the projections of the carrier are provided with second recesses, which co-act with the first recesses, for locking the rotation of the carrier around the longitudinal axis of the housing.

Because of the recesses in the projections and the protrusions, the projections and protrusions fit into each other, whereby the carrier cannot unintentionally rotate during barbecuing, as a result of which the protrusions and projections can come out of engagement and the carrier could fall downward. The recesses thus provide for a locking against rotation.

In yet another embodiment of the barbecue according to the invention the carrier comprises a carrying handle with two free ends and two eyes lying diametrically opposite each other are arranged on the carrier, wherein a free end of the carrying handle protrudes into each eye and the carrying handle can be tilted between an upright position and a lying position.

The carrier can be picked up easily with the carrying handle, certainly when the carrier is situated in the cylindrical housing. The carrier can moreover be easily rotated with the carrying handle in order to thus bring the projections of the carrier out of engagement with the protrusions and enable adjustment of the carrier in the height.

In a further preferred embodiment of the barbecue according to the invention at least one eye is provided with a slot-like recess and the free end protruding into the eye has a cross-section which is the same as the slot-like recess, and the free end is inserted into the slot in the upright position of the carrying handle for the purpose of forming a form-fitting connection between the carrying handle and the carrier.

When the carrying handle is in this embodiment picked up and brought into the upright position at least one end of the carrying handle will slide into a slot-like recess, whereby a form-fitting connection is created and the carrying handle can no longer rotate relative to the carrier as long as the carrier is suspended from the carrying handle.

The advantage is that when a quantity of food is not evenly distributed over the carrier, the carrier can still be lifted to a different level without the carrier turning around the carrying handle and the food falling from the carrier.

These and other features of the invention are further elucidated with reference to the accompanying drawings.
Figure 1 shows a perspective view of an embodiment of a barbecue according to the invention.
Figure 2 shows a side view of an elongate element of the height adjustment.
Figure 3A shows a perspective view of a carrier for the barbecue according to the invention.
Figure 3B shows a detail of the carrying handle of the carrier according to figure 3A.
Figures 4A and 4B show the carrier of figure 3A in two positions in the barbecue according to figure 1.
Figure 5 shows a detail of the height adjustment.
Figure 6 shows a perspective view of a scoop for the barbecue according to the invention.

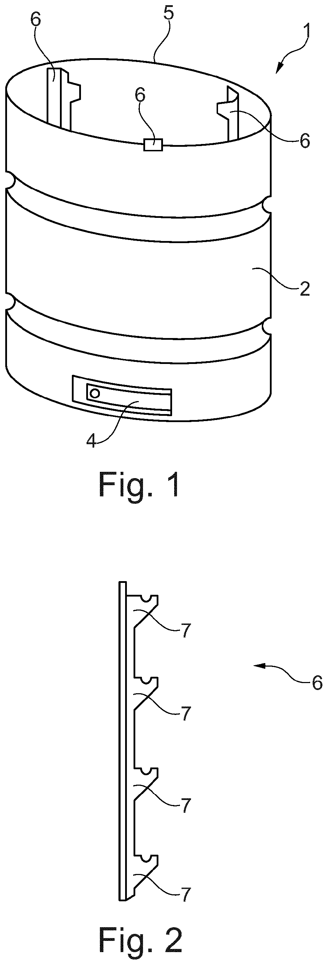

Figure 1 shows a barbecue 1 according to the invention. This barbecue 1 has a cylindrical housing 2 made of for instance an oil drum. Arranged close to the underside of housing 2 is an air feed opening 3 which can be closed by means of a slide 4. Even more air feed openings can optionally be provided in housing 2, for instance diametrically opposite the shown air feed opening.

Three elongate elements 6, these elements 6 being arranged against the inner wall of housing 2, extend downward from upper edge 5, which forms an access opening of housing 2.

Figure 2 shows an elongate element 6 in side view. This elongate element 6 has been bent into having an L-shaped cross-section from a flat sheet which has been cut out such that protrusions 7 have also been formed. A hook can further optionally be provided on the upper side of elongate element 6, whereby elongate element 6 can be hung from the upper edge 5 of housing 1.

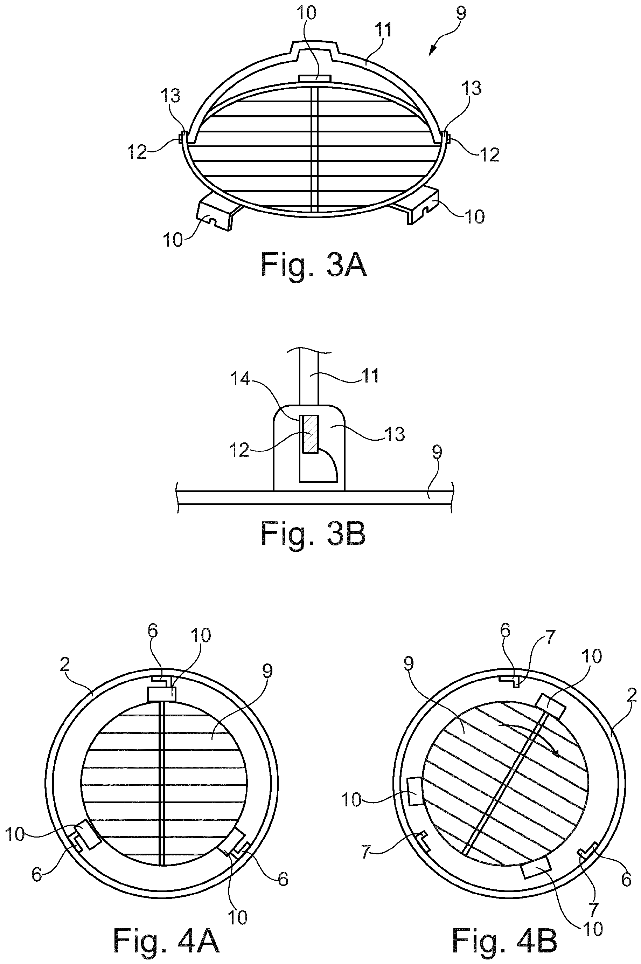

Figure 3A shows a perspective view of a carrier 9 which takes the form of a grille. Provided along the periphery of carrier 9 are three projections 10 which can co-act with protrusions 7.

Carrier 9 further has a carrying handle 11 with two free outer ends 12 which protrude through eyes 13.

As shown in figure 3B, free outer end 12 protrudes through eye 13. This eye 13 is provided on the upper side with a slot-like recess 14. Free outer end 12 has a rectangular cross-section, whereby free outer end 12 forms a form-fitting connection and carrying handle 11 cannot rotate relative to carrier 9 in this position.

Figure 4A shows a top view of carrier 9 arranged in housing 2. Projections 10 of carrier 9 here rest on protrusions 7 of elongate elements 6, which are arranged against the inner wall of housing 2.

In figure 4B carrier 9 has been rotated relative to housing 2, whereby projections 10 are out of engagement with protrusions 6 and whereby carrier 9 can be lowered or can be lifted in the housing so as to be positioned at a different level.

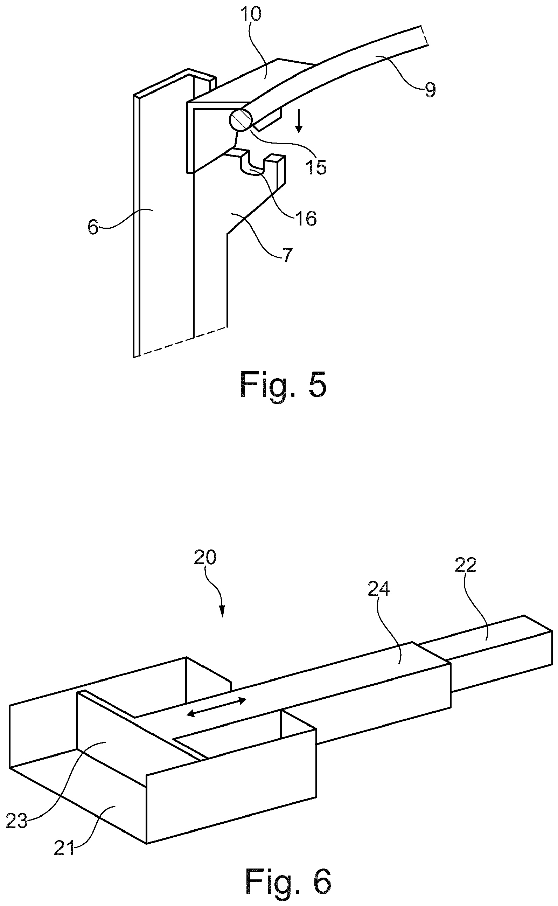

Figure 5 shows a detail of the engagement of projection 10 on a protrusion 7. A recess 15 is provided in projection 10 and a recess 16 is provided in protrusion 7. When carrier 9 is lowered onto protrusions 7, recesses 15, 16 will mutually engage, whereby carrier 9 cannot slide off elongate elements 6.

Figure 6 shows a scoop 20 whereby moist wood chips and the like can be easily added via air feed opening 4.

Scoop 20 has for this purpose a tray 21 to which a handle 22 is attached. Provided in tray 21 is a slide element 23 which slides with a guide 24 over handle 22. It is hereby possible to scoop up moist wood chips in tray 21 and to slide them out of tray 21 again by means of slide element 23, and thus deposit the wood chips in barbecue 1.

## Claims

1. Barbecue comprising:
- a housing with a bottom and a cylindrical wall standing upright from the bottom, wherein the free upper edge of the cylindrical wall defines an access opening and wherein at least one air feed opening is arranged in the cylindrical wall close to the bottom;
- height-adjusting means arranged against the inner side of the cylindrical wall;
- at least a carrier arranged on the height-adjusting means, so that the height of the carrier in the housing can be adjusted
**characterized in that**
the height-adjusting means comprise at least three elongate elements arranged along the cylindrical wall and each extending substantially over the height of the cylindrical wall, wherein each elongate element is provided with a number of protrusions arranged along the length and extending substantially radially in the housing; and
a number of projections is arranged along the periphery of the carrier and directed outward.

2. Barbecue as claimed in claim 1, wherein the protrusions of the elongate elements are arranged on a virtual circle with a first radius, as seen in axial direction of the housing, wherein the projections of the carrier are arranged on a virtual circle with a second radius and wherein the first radius is smaller than the second radius.

3. Barbecue as claimed in claim 1 or 2, wherein each elongate element is a sheet bent into having a substantially L-shaped cross-section, and having a uniform thickness.

4. Barbecue as claimed in claim 3, wherein the protrusions are tongues formed from the bent sheet.

5. Barbecue as claimed in claim 4, wherein first recesses facing toward the upper side of the housing are provided in the edge of the tongues and wherein the projections of the carrier are provided with second recesses, which co-act with the first recesses, for locking the rotation of the carrier around the longitudinal axis of the housing.

6. Barbecue as claimed in any of the foregoing claims, wherein the carrier comprises a carrying handle with two free ends and wherein two eyes lying diametrically opposite each other are arranged on the carrier, wherein a free end of the carrying handle protrudes into each eye and the carrying handle can be tilted between an upright position and a lying position.

7. Barbecue as claimed in claim 6, wherein at least one eye is provided with a slot-like recess and wherein the free end protruding into the eye has a cross-section which is the same as the slot-like recess, and wherein the free end is inserted into the slot in the upright position of the carrying handle for the purpose of forming a form-fitting connection between the carrying handle and the carrier.
